# EUROPÄISCHE PATENTANMELDUNG

(11) **EP 2 626 338 A1**
(43) Veröffentlichungstag der Anmeldung: **14.08.2013**
(21) Anmeldenummer: 12154770.7
(22) Anmeldetag: 09.02.2012
(51) Int. Cl.: C04B 24/38, C04B 28/26

(54) **Binderzusammensetzung und Wegematerial umfassend eine Binderzusammensetzung**

(71) Anmelder: STONES Gesellschaft für Mineralische Baustoffe GmbH, 18069 Rostock (DE)
(72) Erfinder: Fritsche, Sven, 18109 Rostock (DE)
(74) Vertreter: Eisenführ, Speiser & Partner

(57) **Zusammenfassung**

Die Erfindung betrifft eine Binderzusammensetzung, umfassend Wasserglas und ein organisches hydrokolloides Material. Sie betrifft ferner Wegematerial, umfassend eine solche Binderzusammensetzung sowie die Verwendung der Binderzusammensetzung zum Binden einer Gesteinskörnung. Die Erfindung betrifft ferner ein Verfahren zum Bereitstellen einer Verkehrsfläche oder von Teilen einer Verkehrsfläche, wobei die Binderzusammensetzung eingesetzt wird.

## Beschreibung

Die Erfindung betrifft eine Binderzusammensetzung, umfassend Wasserglas und ein organisches hydrokolloides Material. Sie betrifft ferner Wegematerial, umfassend eine solche Binderzusammensetzung sowie die Verwendung der Binderzusammensetzung zum Binden einer Gesteinskörnung. Die Erfindung betrifft ferner ein Verfahren zum Bereitstellen einer Verkehrsfläche oder von Teilen einer Verkehrsfläche, wobei die Binderzusammensetzung eingesetzt wird.

Verschiedene Materialien für durch Fußgänger- oder Fahrzeugverkehr belastete Flächen (oder Teile davon) sind bekannt. Die am weitesten verbreiteten Materialien sind ungebundene Materialien, wie z.B. Kies, Sand, Splitt oder Brechsandgemische. Die Festigkeit und Dauerhaftigkeit der mit diesen Baustoffen ausgeführten Wegeflächen oder Fugenverfüllungen ist gering und die Erosionsanfälligkeit groß, die Verunkrautung dieser Flächen und Fugen ist mit Länge der Nutzung zunehmend. Diese Baustoffe können sowohl wasserdurchlässig als auch wasserundurchlässig sein.

Eine zweite Gruppe der bekannten Baustoffe für Verkehrsflächen sind gebundene Materialien. Z.B. durch Zement, Asphalt oder Polymere (Kunststoffe), Kalk, etc. oder deren Gemische, können Materialien wie z.B. Kies, Sand, Splitt und Brechsandgemische (Gesteinskörnungen) dauerhaft gebunden werden.

Diese Baustoffe zeichnen sich negativ durch mögliche Risse- und Brüche nach Frost-Tau-Wechselperioden und Setzungen aus, besonders Fugenverfüllprodukte sind davon betroffen. Die Flanken der die Fugen begrenzenden Steine reißen vom Fugenmaterial ab. Jedoch sind diese gebundenen Baustoffe haltbarer als die ungebundenen Materialien. Die gebundenen Baustoffe sind jedoch starr und monolithisch, in den entstehenden Rissen siedeln sich Pflanzen (Unkräuter an) an. Meist sind diese Materialien wasserundurchlässig und versiegeln Flächen.

Eine dritte Gruppe sind die halbgebunden Baustoffe. Die halbgebundenen Baustoffe sind erosionsbeständiger als die ungebundenen Materialien und gleichzeitig flexibel, elastisch, so dass z.B. eine Bewegung von Pflastersteinen gegeneinander oder ein Setzen der Tragschicht (des Unterbaus) aufgefangen werden kann.

Im vorbekannten Stand der Technik werden Gesteinskörnungen entweder nur mit Psyllium oder unter Zugabe von mineralischen Zuschlägen gemischt. Die Nachteile dieser Anwendung sind bekannt:
Psyllium allein neigt zur Zersetzung und/oder zum Ausgewaschen werden durch Regenwasser, der Pflanzenwuchs wird nicht reduziert. Die Zugabe von mineralischen Additiven erhöht zwar die Erosionsbeständigkeit gegenüber der Alleinanwendung von Psyllium, die Festigkeit der Verkehrsflächen wird jedoch nicht verbessert. Die die Erosionsbeständigkeit erzeugenden Additive hinterlassen auf den mit dem Fugenmaterial verfüllten Steinflächen oft weiße oder graue Schleier, die Fläche werden verschmutzt. Die Verwendung ist nicht anwenderfreundlich.

Beispiele für die dritte Gruppe von Baustoffen werden in der WO 2006/029539 A1 offenbart. Dort wird ein Bindemittelgemisch aus Psyllium, Kalziumhydroxid und Natriumcarbonat als Binderzusammensetzung beschrieben, auch der Einsatz als Bestandteil von Wegematerial ist offenbart. Die in diesem Dokument beschriebenen Zusammensetzungen zeigen insbesondere Schleierbildung beim Einsatz als Fugenmaterial und die Erosionsbeständigkeit ist verbesserungsfähig.

Dementsprechend war es auch Aufgabe der vorliegenden Erfindung, ein Bindermaterial anzugeben, dass anwenderfreundlich ist, eine gute Binderwirkung zeigt und insbesondere beim Einsatz als Fugenmaterial eine verringerte, bevorzugt keine Verschmutzung der Materialien, die die Fugenbegrenzungen bilden, verursacht. Ferner soll das Bindermaterial bevorzugt eine gute Flexibilität, Selbstheilungsmöglichkeiten und/oder gute Erosionsbeständigkeit besitzen. Es sollte ferner bevorzugt über eine gute Wasserdurchlässigkeit im gebundenen Zustand verfügen sowie zu einem erheblichen Anteil aus nachwachsendem Rohstoff bestehen.

Diese Aufgabe wird gelöst durch eine Binderzusammensetzung, umfassend
(i) Wasserglas der allgemeinen Formel (I):

   M₂O*nSiO₂ (I)

   wobei
   M ein Alkalimetall bedeutet, ausgewählt aus der Gruppe bestehend aus K und Na und
   n eine Zahl von 0,8 bis 5 und
(ii) ein organisches hydrokolloides Material.

Eine Binderzusammensetzung ist dabei im Sinne dieses Textes in der Lage, den zu bindenden Materialien einen festeren Zusammenhang zu vermitteln, als diese Materialien ohne die entsprechende Binderzusammensetzung unter den gleichen Umständen erreichen würden.

Eine Gesteinskörnung im Sinne dieses Textes ist eine Ansammlung von Partikeln (wie z.B. Gesteinsbruchstücke, Bruchstücke von Mineralien, Kristallen oder ähnlichen Materialien, insbesondere von Sand, Schotter, Kies, Splitt und Schlacke.

Ein organisches hydrokolloides Material im Sinne dieses Textes ist ein Material, das bei Kontakt mit Wasser anschwillt, wobei Wasser an das hydrokolloidale Material gebunden oder in dieses eingelagert wird. Häufig entsteht dabei ein Gel. Durch diesen Schwellvorgang werden Räume zwischen zu bindenden Materialien, wie z.B. den Partikeln einer Gesteinskörnung gefüllt. Bevorzugt im Sinne der folgenden Erfindung ist es, dass das hydrokolloide Material nach Kontakt mit Wasser und gegebenenfalls in Kombination mit dem Wasserglas bei Trocknung aushärtet, so dass die zu bindenden Partikel aneinander gebunden werden.

Es hat sich überraschenderweise herausgestellt, dass die Kombination von organischem hydrokolloiden Material mit Wasserglas ein Bindermaterial bereitstellt, das im abgebundenen Zustand über eine hohe Flexibilität verfügt, eine gute Festigkeit bereitstellt und sogar über eine Selbstheilungsfähigkeit verfügt. Diese Selbstheilungsfähigkeit zeichnet sich dadurch aus, dass z.B. bei starker Wasserbelastung wie z.B. bei Regen im Bindermaterial nach der Aushärtung ein Teil der Bindungen gelöst werden und diese später, insbesondere bei Trocknung des Bindermaterials, wieder neu geknüpft werden. Somit kann das erfindungsgemäße Bindermaterial auch nach Aushärtung flexibel auf Bewegungen des gebundenen bzw. zu bindenden Materials reagieren und die gebundenen Flächen bleiben auch bei erheblicher Belastung mit Wasser weitgehend intakt. Ferner hat sich herausgestellt, dass durch die Zugabe von Wasserglas die Festigkeit der abgebundenen Binderzusammensetzung deutlich erhöht wird und zudem noch die Auswaschung des organischen hydrokolloiden Materials bei Belastung mit Wasser deutlich verringert wird. Trotzdem bleibt eine ausreichende Wasserdurchlässigkeit des Bindermaterials erhalten.

Ohne an eine Theorie gebunden zu sein, wirkt sich das Wasserglas in der erfindungsgemäßen Binderzusammensetzung insbesondere dadurch aus, dass es eine verbesserte innere Vernetzung der erfindungsgemäßen Binderzusammensetzung beim Aushärten bereitstellt. Diese führt zu einer erhöhten Stabilität, ohne dass eine unerwünschte irreversible Verfestigung entsteht. Dies kann u.a. dadurch erreicht werden, dass das Wasserglas Alkalimetallionen zur Verfügung stellt, die das Knüpfen von intramolekularen Verbindungen im organischen hydrokolloiden Material beim Quellen (also der Aufnahme von Wasser) unterstützen. Außerdem bildet Wasserglas bei Reaktion mit Wasser neben einzelnen Monosilicationen auch cyclische und intermolekular raumvernetzte Polysilicationen aus, so dass ein zusätzliches (bindendes) Gerüst bereitgestellt wird.

Erfindungsgemäß bevorzugt ist, dass die erfindungsgemäße Binderzusammensetzung eine Feststoffmischung, insbesondere pulverförmig ist.

Besonders bevorzugtes hydrokolloides organisches Material ist Psyllium.

Psyllium im Sinne dieses Textes ist dabei ein Pflanzenmaterial, das aus Wegerich (*Plantago*), Untergattung Psyllium gewonnen wurde. Hierbei ist insbesondere Material aus der Epidermis und den angrenzenden Schichten (Samenschalen) des getrockneten reifen Samens der Pflanze zu verstehen. Bevorzugt handelt es sich um zerkleinertes, insbesondere vermahlenes Pflanzen material. Besonders bevorzugt stammt Psyllium aus [Plantago ovata (indischer Flohsamen). Ein solches bevorzugtes Material ist z.B. unter dem Handelsnamen Blond Psyllium bzw. Blond Psyllium Husk. (Schale) erhältlich. Weitere Handelsnamen sind Indian Psyllium oder Isphagula. Der indische Flohsamen zeichnet sich gegenüber Flohsamen anderer Herkunft (z.B. Spanien, Frankreich dort Plantago afra) durch sein hohes Quellvermögen aus, also die Fähigkeit Wasser aufzunehmen und zu binden. In der Epidermis der europäischen Flohsamenarten sind ca. 10-12% Schleimstoffe (insbesondere Arabinoxylane) mit einer Quellzahl von mindestens 10 enthalten. Die Samenschalen des indischen Flohsamens enthalten ca. 20-30% Schleimstoffe. Im Samen selbst können Öl, Zellulose, Proteine sowie Iridoglykoside (u.a. Aucubin) vorkommen. Die indischen Flohsamenschalen bestehen aus der äußersten schleimhaltigen Schicht der Samenschale, d.h. der Schalenepidermis, und den darunter liegenden Schichten der Samenschale. Ganz besonders bevorzugt ist Psyllium im Sinne dieser Anmeldung gemahlenes Pulver aus der Samenschale des indischen Flohsamens mit einer Quellzahl von ≥ 20, bevorzugt ≥ 40, weiter bevorzugt ≥ 60, insbesondere 60-90.

Bevorzugt wird für das ganz besonders bevorzugte Psyllium eine Reinheit von 85 - 99 % und/oder eine Mahlfeinheit von 40 - 200 mesh.

Unter Psyllium im Sinne dieses Textes fällt jedoch auch geriebenes (vermahlenes) Material der entsprechenden Pflanzen aus dem gesamten Samen. Psyllium ist entsprechend dem vorher Beschriebenen ein organisches Bindemittel mit schleimbildenden Eigenschaften. Bei Kontakt mit Wasser bildet Psyllium ein schleimartiges Gel, das im Wesentlichen die Partikel der zu bindenden Materialien aneinander bindet. Dies wird vorzugsweise dadurch erreicht, dass man das Gemisch nach Kontakt mit Wasser eine bestimmte Zeit lang fest werden lässt. Nach dem Trocknen wird Psyllium fest und bildet eine flexible und elastische Bindung unter und zwischen den zu bindenden Partikeln. Bei dieser Bindung handelt es sich jedoch um eine physikalische Bindung, so dass Selbstheilungsmöglichkeiten (siehe unten) gegeben sind. Bevorzugt ist eine erfindungsgemäße Binderzusammensetzung, bei der das Wasserglas Kaliwasserglas ist. Kaliwasserglas hat sich dabei als besonders effektiv im Sinne der oben beschriebenen Aufgabenstellung gezeigt.

Die Tatsache, dass Wasserglas, insbesondere Kaliwasserglas, in der erfindungsgemäßen Binderzusammensetzung enthalten ist, hat einen weiteren positiven Effekt: Der pH-Wert der Binderzusammensetzung wird erhöht, so dass auch nach Aushärtung ein Pflanzenwachstum wirksam vermindert wird.

Besonders bevorzugt ist eine erfindungsgemäße Binderzusammensetzung, die zusätzlich noch Natriumcarbonat umfasst. Besonders bevorzugt in diesem Zusammenhang ist dabei wasserfreies Natriumcarbonat (calciniertes, wasserfreies Soda). Grundsätzlich ist aber auch denkbar, dass Natriumcarbonat mit Kristallwasser, wie z.B. mit einem Molekül, 7 Molekülen oder 10 Molekülen Kristallwasser pro Molekül Natriumcarbonat eingesetzt wird.

Der Einsatz von Natriumcarbonat in der erfindungsgemäßen Binderzusammensetzung zeigt eine Reihe von vorteilhaften Effekten. Zum einen werden - ohne an eine Theorie gebunden zu sein - durch Natriumcarbonat die intermolekularen Wechselwirkungen innerhalb des Bindermaterials (der abgebundenden Binderzusammensetzung) unterstützt. Zusätzlich erfolgt durch die Zugabe und Einbindung der Carbonat- bzw. der Hydrogencarbonationen aus dem Soda in die sich bildenden Netzstruktur aus Psyllium und Wasserglas die Bereitstellung eines weiteren alkalischen Depots, das gewährleistet, dass eine Erniedrigung des pH-Wertes durch Auswaschen bzw. durch Reaktion mit Kohlendioxid aus der Luft wesentlich verlangsamt wird.

Da die Quellfähigkeit des organischen hydrokolloiden Materials, insbesondere des Psylliums bei Kontaktierung mit dem Wasser auch nach Aushärtung noch gegeben ist, bewirkt das Vorhandensein von Natriumcarbonat - wiederum ohne an eine Theorie gebunden zu sein - eine Moderation des Schwellvorganges, da Natriumcarbonat seinerseits hygroskopisch sein kann. Somit kann verhindert werden, dass ein zu rapider Schwellvorgang stattfindet.

Wie bereits zuvor angedeutet, bewirkt Natriumcarbonat eine Erhöhung des pH-Wertes, was herbizide und fungizide Wirkung ausüben kann. Dies hat nicht nur den Vorteil, dass die Bindermaterialien nicht von Pflanzen/Pilzen besiedelt werden, was optische Beeinträchtigung bedeuten kann, sondern auch den Vorteil, dass diese Organismen, insbesondere wenn es sich um Pilze handelt, die Degradation des organischen hydrokolloiden Materials bewirken oder beschleunigen können. Solch eine Degradation würde die Bindewirkung der Binderzusammensetzung bzw. des Bindermaterials als abgebundene Binderzusammensetzung verringern.

Es kann im Sinne der Erfindung bevorzugt sein, ein sterilisiertes oder zumindest keimreduziertes organisches hydrokolloides Material in der erfindungsgemäßen Binderzusammensetzung einzusetzen. Keimreduziert bedeutet dabei, dass die Zahl der Keime ≤ 5.000 KbE/g ist, Bevorzugt ≤ 3000 KbE/g, weiter bevorzugt ≤ 1700 KbE/g, wobei KbE = Koloniebildende Einheit bedeutet.

Die Keimreduzierung bewirkt eine allgemeine verbesserte Akzeptanz des Werkstoffes im Markt, hat aber auch den technischen Effekt, dass Keime grundsätzlich auch am Abbau der Materialien der Binderzusammensetzung, hier insbesondere des organischen hydrokolloiden Materials beteiligt sein können.

In Analogie zu dem Vorgesagten kann es erfindungsgemäß bevorzugt sein, dass die erfindungsgemäße Binderzusammensetzung (weitere) herbizide und/oder fungizide Wirkstoffe umfasst.

Erfindungsgemäß bevorzugt ist eine erfindungsgemäße Binderzusammensetzung, wobei n in Formel I eine Zahl von 2,0 bis 4,0, bevorzugt 2,5 bis 3,5 und besonders bevorzugt 3 ist. Dementsprechend ist ganz besonders bevorzugt in der erfindungsgemäßen Binderzusammensetzung als Wasserglas Kaliwasserglas der Formel K₂O*3 SiO₂ enthalten.

Bevorzugt ist eine erfindungsgemäße Binderzusammensetzung, wobei das Gewichtsverhältnis von Wasserglas zu organischem hydrokolloiden Material 1 : 0,1 bis 1 : 10, bevorzugt 1 : 0,5 bis 1 : 3 besonders bevorzugt 1 : 1 bis 1 : 2 beträgt.

Die beschriebenen Verhältnisse führen zu besonders flexiblen, und besonders festen Bindungen in der abgebundenen Binderzusammensetzung, wobei noch eine ausreichende Wasserdurchlässigkeit gegeben ist.

Erfindungsgemäß weiter bevorzugt ist eine oben beschriebene erfindungsgemäße Binderzusammensetzung, wobei Natriumcarbonat enthalten ist und das Gewichtsverhältnis von Natriumcarbonat zu organischem hydrokolloiden Material 1 : 0,1 bis 1 : 10, bevorzugt 1 : 0,5 bis 1 :3, besonders bevorzugt 1 : 1 bis 1 : 2 beträgt und/oder das Gewichtsverhältnis von Na₂CO₃ zu Wasserglas 1 : 0,1 bis 1 : 10, bevorzugt 1 : 0,5 bis 1 :5 besonders bevorzugt 1 : 0,8 bis 1 : 1,2 beträgt.

In den bevorzugten Mengenverhältnissen ist Natriumcarbonat besonders gut durch seine oben beschriebenen positiven Eigenschaften zu bewirken. Eventuell vorhandenes Kristallwasser wird stets nicht zur Masse Natriumcarbonat gerechnet.

Erfindungsgemäß weiter bevorzugt ist eine erfindungsgemäße Binderzusammensetzung, wobei der pH-Wert der Zusammensetzung 5,0 bis 13,5, bevorzugt 9,0 bis 12,0 beträgt.

Der pH-Wert wird dabei wie folgt gemessen: Eine Probemenge von 20 g Binderzusammensetzung wird mit einem Löffel in ein Messgefäß mit 100 ml Inhalt gegeben. Dieses Messgefäß wird mit 40 ml Wasser aufgefüllt. Binder und Wasser wird mit einem Löffel verrührt. Dann wird 5 Minuten gewartet. Nach 5 Minuten wird mittels eines kalibrierten pH- Meters (Messgerät) die Glaselektrode des Messgeräts in die Probe getaucht. Nach einer Minute wird der pH-Wert gemessen.

Dabei ist es nachvollziehbar, dass aus den oben genannten Gründen hohe pH-Werte, also pH-Werte größer als 10, besonders bevorzugt sind.

Bestandteil der Erfindung ist ein Wegematerial, umfassend eine erfindungsgemäße Binderzusammensetzung und eine Gesteinskörnung oder ein Wegematerial, bestehend aus den genannten Bestandteilen.

Wegematerial im Sinne des vorliegenden Textes ist dabei Material, das wenigstens einen Teil der Oberfläche einer verkehrsbelasteten Fläche bilden kann. Unter verkehrsbelasteter Fläche sind solche Flächen zu verstehen, auf der sich Fußgänger- oder Fahrzeugverkehr fortbewegen. Hier sind insbesondere zu nennen Gehwege, Pfade, Fahrwege, Bürgersteige, Terrassen oder Ähnliches.

Der Fachmann wird dabei für das erfindungsgemäße Wegematerial die Mengenverhältnisse von Gesteinskörnung und Bindermaterial und auch das Material der Gesteinskörnung dem jeweiligen Zweck anpassen.

Erfindungsgemäß bevorzugt ist dabei ein erfindungsgemäßes Wegematerial, wobei das Gewichtsverhältnis Gesteinskörnung zur Gesamtmasse an Bindermaterial gemäß einem der Ansprüche 1 bis 9 von 80 : 20 bis 99,9 : 0,1, bevorzugt von 90 : 10 bis 99,6 : 0,4, weiter bevorzugt von 95,0 : 5 bis 99,0 beträgt.

In diesen Gewichtsverhältnissen zeigt das erfindungsgemäße Wegematerial besonders gute Eigenschaften im Sinne der oben beschriebenen Aufgabenstellung.

Weiter bevorzugt ist ein erfindungsgemäßes Wegematerial, wobei das Wegematerial einen Wassergehalt von 0 bis 20 Gew.-% enthält, bevorzugt 0 bis 10 Gew.-%, bezogen auf die Gesamtmasse des Wegematerials.

Hierbei ist zu beachten, dass das Wegematerial selbstverständlich nach Aufbringung über einen höheren (gebundenen) Wassergehalt verfügen kann, da bei der Aushärtung das organische hydrokolloide Material und auch das Wasserglas Wasser binden können.

Erfindungsgemäß bevorzugt kann ein Wegematerial sein, wobei die Gesteinskörnung ≥ 95 Gew.-% bevorzugt ≥ 99 Gew.-% bezogen auf die Gesamtmasse der Gesteinskörnung aus Brechsand oder Natursand eines Körnungsgrößengemisches von 0,001 bis 2 mm besteht.

Dieses Wegematerial eignet sich besonders gut als Material, das Teil einer verkehrsbelasteten Fläche zwischen Pflastersteinen (Fugen) bilden soll. Ein solches Wegematerial als Fugenmaterial enthält vorzugsweise Brechsandgemische als Gesteinskörnung. Brechsand weist sich dabei durch weniger abgerundete Partikel aus.

Die Partikelgröße wird dabei über Sieblinien bestimmt bevorzugt analog oder bevorzugt genau nach DIN EN 18123 bestimmt.

Ein weiteres erfindungsgemäß bevorzugtes Wegematerial ist ein solches, wobei die Gesteinskörnung zu ≥ 95% bevorzugt ≥ 99,5 Gew.-% bezogen auf die Gesamtmasse der Gesteinskörnung aus einem Brechsand-Splittgemisch eines Körnungsgrößengemisches von 0,001 bis 8 mm oder 0,001 bis 5 mm oder 0,001 bis 16 mm besteht.

Dieses erfindungsgemäße Wegematerial eignet sich besonders gut zur Herstellung verkehrsbelasteter Flächen, die keine Pflasterungselemente aufweisen, wie z.B. Wege oder Plätze.

Teil der Erfindung ist auch die Verwendung einer erfindungsgemäßen Binderzusammensetzung zum Binden einer Gesteinskörnung.

Wie bereits oben beschrieben, ist durch die erfindungsgemäße Binderzusammensetzung ein besonders gutes Eigenschaftsfenster hinsichtlich der erzielbaren Bindung möglich.

Bestandteil der Erfindung ist ferner ein Verfahren zum Bereitstellen einer Verkehrsfläche oder von Teilen einer Verkehrsfläche, umfassend die Schritte:
a) Bereitstellen einer erfindungsgemäßen Binderzusammenstellung oder eines erfindungsgemäßen Wegmaterials;
b) Auftragen der Binderzusammensetzung oder des Wegmaterials auf den Bereich oder einen Teil des Bereiches, der die Verkehrsfläche bilden soll;
c) Verdichten des im Schritt b) aufgetragenen Materials und
d) gegebenenfalls Anfeuchten des aufgetragenen Materials.

Dabei ist es im Schritt b) möglich, dass das Auftragen so erfolgt, dass lediglich Fugen zwischen Pflasterelementen, wie z.B. Pflastersteinen, gefüllt werden.

Es ist bevorzugt, dass nach Verdichten im Schritt c) die Oberflächen der Pflasterelemente z.B. Pflastersteine mit einem Laubläser, Besen oder geeignetem Gerät von Rückständen des aufgetragenen Materials gereinigt werden.

Es ist bevorzugt, dass im Schritt d) das Anfeuchten das komplette Fugenmaterial erfasst, damit die zu bindenden Materialien relativ gleichmäßig durch das Bindermaterial aneinander haften. Es ist dabei bevorzugt darauf zu achten, dass die Wässerung so erfolgt, dass tatsächlich das gesamte Bindermaterial mit Wasser in Kontakt kommt, da es vorkommen kann, dass lediglich an der Oberfläche Wasser gebunden wird und der Durchtritt des Wassers in tiefere Bereiche zumindest erheblich verlangsamt wird. Grund hierfür ist das Anschwellen des hydrokolloiden Materials. Nach dem Anfeuchten sind bevorzugt 5-10 Minuten zu warten, dann ist mit starkem Strahl die Steinoberflächen von eventuell verbleibenden Resten zu reinigen und das Fugenmaterial gründlich zu wässern.

Es ist weiterhin bevorzugt, dass für den Fall, dass keine Pflasterelemente eingesetzt werden (Wegedecke ist komplett aus erfindungsgemäßem Wegematerial) im Schritt d) das Anfeuchten das komplette Wegematerial erfasst damit die zu bindenden Materialien relativ gleichmäßig durch das Bindermaterial aneinander haften. Es ist dabei bevorzugt darauf zu achten, dass die Wässerung so erfolgt, dass tatsächlich das gesamte Bindermaterial mit Wasser in Kontakt kommt, da es vorkommen kann, dass lediglich an der Oberfläche Wasser gebunden wird und der Durchtritt des Wassers in tiefere Bereiche zumindest erheblich verlangsamt wird. Grund hierfür ist das Anschwellen des hydrokolloiden Materials. Sobald die Deckschicht wieder halb abgetrocknet und somit erdfeucht ist (je nach Witterung dauert dies 4-48 Stunden), erfolgt bevorzugt ein Nachverdichten mit statischer Walze bzw. Tandemwalze ohne Vibration.

Nach dem Durchfeuchten im erfindungsgemäßen Verfahren ist es bevorzugt, das durchfeuchtete Gemisch wieder (weitgehend) trocknen zu lassen, wodurch es sich verfestigt (abbindet).

Nachfolgend wird durch Beispiele der Effekt der Erfindung gezeigt.

### Beispiel 1 - Erosionsbeständigkeitstest

Aus dem Stand der Technik (WO 2006/029539 A1) ist bekannt, dass ein Wegematerial der nachfolgenden Zusammensetzung gegenüber einer Mischung aus einer Gesteinskörnung und lediglich Psyllium als Bindermaterial hinsichtlich der Erosionsbeständigkeit überlegen ist. Das aus dem Stand der Technik bekannte Gemisch setzt sich wie folgt zusammen (Probe A):

| | |
|---|---|
| Gesteinskörnung: | 97,2 Gew.-% Körnungsgröße 0-2 mm |
| Psyllium: | 1,4 Gew.-% |
| Kalziumhydroxid: | 0,8 Gew.-% |
| Natriumcarbonat (Soda): | 0,6 Gew.-% |

(Wegematerial, insbesondere für Fugen aus dem Stand der Technik)

Die oben beschriebene Probe A wurde mit einem Wegematerial verglichen, dass die erfindungsgemäße Binderzusammensetzung umfasst. Die Zusammensetzung war wie folgt (Probe B):

| | |
|---|---|
| Gesteinskörnung: | 96,6 Gew.-% Körnungsgröße 0-2 mm |
| Psyllium: | 1,4 Gew.-% |
| Kaliwasserglas K₂O*3 SiO₂) | 1,0 Gew.-% |
| Natriumcarbonat: | 1,0 Gew.-% |

(Erfindungsgemäßes Wegematerial).

Der Erosionsbeständigkeitstest wurde mit einem Labor-Niederschlagssimulator der TU Freiberg durchgeführt.

Der Labor-Niederschlagssimulator besteht aus einer großen Metallwanne mit einer Mehrzahl an eingestanzten Öffnungen. Die Wanne wird oberhalb der Proben angeordnet, die sich in einem großen Becken oder einem Bassin mit einem Ablauf befinden. Wasser, das in die Wanne gefüllt wird, rinnt als Niederschlagssimulation durch die Öffnungen auf die Proben. Der Simulator simuliert über einen bestimmten Zeitraum in realistischer Weise Niederschlag.

Jeder der Tests dauerte 3 Stunden, und für jedes Produkt wurden drei Probewannen verwendet. Das zu untersuchende Material (Probe A und Probe B) wurden als Fugenmaterial eingesetzt, d.h. als Fuge zwischen begrenzenden Steinen. Die Fugenmaße und die Ergebnisse sind in nachfolgender Tabelle 1 aufgeführt.

**Tabelle 1**

| Testdatum: 10. Januar 2012 | | | | |
|---|---|---|---|---|
| Testbedingungen: | | | | |
| Durchschnittliche Fugenmaße | 35,5 cm * 4,0 cm * 3,0 cm | | | |
| (Länge * Breite * Tiefe) | | | | |
| Beregnungshöhe | 131 cm | | | |
| Beregnungsintensität pro Minute | 2,292 mm pro min oder: | | | |
| | 2,292 l/m² pro min | | | |
| Beregnungsdauer | 3 Stunden | | | |
| Gefälle | 2,5% | | | |
| Trockentemperatur | 30°C | | | |

| Probe-A / Gemisch Stand der Technik: | | | | |
|---|---|---|---|---|
| Fugenbezeichnung | Gesamtgewicht | Gewicht nach Beregnung | Erosionsabtrag in Gramm | Erosionsabtrag in Prozent |
| Fuge 2 a | 673,97 g | 635,21 g | 38,76 g | 5,75% |
| Fuge 2 b | 693,84 g | 654,70 g | 39,14 g | 5,64% |
| Fuge 2 c | 686,75 g | 649,19 g | 37,56 g | 5,47% |
| | | | | |
| **Durchschnitt** | **684,85 g** | **646,37 g** | **38,48 g** | **5,62%** |

| Probe-B / erfindunqsqemäße Ausstattung: | | | | |
|---|---|---|---|---|
| Fugenbezeichnung | Gesamtgewicht | Gewicht nach Beregnung | Erosionsabtrag in Gramm | Erosionsabtrag in Prozent |
| Fuge 3 a | 632,99 g | 607,28 g | 25,71 g | 4,06% |
| Fuge 3 b | 657,92 g | 631,14 g | 26,78 g | 4,07% |
| Fuge 3 c | 670,68 g | 645,81 g | 24,87g | 3,71% |
| | | | | |
| **Durchschnitt** | **653,86 g** | **628,08 g** | **25,78 g** | **3,94%** |

### Beispiel 2

### Beobachtung der Elastizität

Die zwei Zusammensetzungen aus Beispiel 1 (Probe A, Stand der Technik, Probe B, erfindungsgemäß) wurden in Petrischalen gegeben, um ihre Konsistenz nach Vermischung mit Wasser sowie ihre Reaktion bei Luftkontakt und Austrocknung zu bewerten. Es wurden jeweils 20 g der jeweiligen Probe in eine Petrischale von 5 cm Durchmesser und 5 mm Höhe mit einem Löffel eingefüllt. Diese Proben wurde mit Wasser aus einer Rundflasche mit Zerstäuber (30 ml Volumen) besprüht und der Inhalt mittels mehrerer Sprühstöße auf die Proben aufgebracht. Die Proben wurden dann bei 30 Grad getrocknet.

Es wurde beobachtet, dass die Zusammensetzung der erfindungsgemäßen Probe B danach eine homogenere und elastischere Konsistenz aufwies als die Probe A (Stand der Technik).

Die nachfolgende Beobachtung wurde nach mehrfachem Befeuchten mit gleicher Menge Wasser aus einer Sprayflache und anschließender Trocknung in Folgeversuchen festgestellt:
Es wurde bei einem Test nach Befeuchten der Proben in einer Petrischale festgestellt, dass die erfindungsgemäße Ausgestaltung bei Andruck mit einem Daumen stabil blieb, während das Gemisch aus Psyllium, Kalk und kalziniertem Soda unter Andruck eines Daumens (gleicher Druck) in der Petrischale zerbröselte. (das Gemisch aus dem Stand der Technik).

Dabei wurden in beiden Fällen die pH - Werte der Gemische in der Petrischale gemessen. Der pH -Wert der erfindungsgemäßen Ausgestaltung lag bei 11,9 und der pH-Wert des Gemischs aus dem Stand der Technik bei 13,2. Es bleibt festzustellen, dass offensichtlich Kaliwasserglas und Psyllium eine homogenere und festere Verbindung eingehen können, als es das Gemisch aus dem Stand der Technik vermag.

### Beispiel 3

### Reinigungstest der Steinoberfläche

Bei Verwendung der Zusammensetzung Probe B (erfindungsgemäß) aus Beispiel 1 wurde die Eigenschaft in einem Praxistest untersucht, Schleier und Verfärbungen auf Steinoberflächen zu erzeugen. Hier wurde wiederum mit Probe A aus Beispiel 1 verglichen. Beide Proben wurden auf eine Pflastersteinoberfläche aufgebracht und unter gleichen Einbaubedingungen und Schritten als Fugenmaterial eingebaut. Hierzu wurde wie folgt vorgegangen: Es wurden zwei Steinflächen ä 5 m² aus Pflasterklinkern verlegt und diese bei trockener Steinoberfläche verfugt. Dazu wurden die Proben (Fugenmaterial) auf die Steinoberfläche verteilt und mittels eines Besens gleichmäßig verteilt. Dann wurden die Steinflächen mit einer Rüttelplatte abgerüttelt und mit einem Laubläser abgeblasen und gereinigt. Anschließend wurde die Steinfläche mit einem Wasserschlauch und Wässerung über einen feinen Sprühkopf vorsichtig gewässert und das Bindemittel aktiviert. Nach einer Wartezeit von 10 Minuten wurde mit starkem Strahl über einen Sprühkopf die Steinoberfläche und die Fugen gewässert. Die Wässerung und Reinigung mit starkem Strahl nahm 15 Minuten je Fläche in Anspruch. Die Lufttemperatur betrug 19 Grad.

Unter Berücksichtigung der üblichen Vorgehensweise zur Reinigung der Steinoberfläche (Laubbläser und Wasserstrahl wie oben beschrieben) wurden nach dem Abtrocknen der Steinoberfläche zwei vollkommen unterschiedliche Ansichten festgestellt.

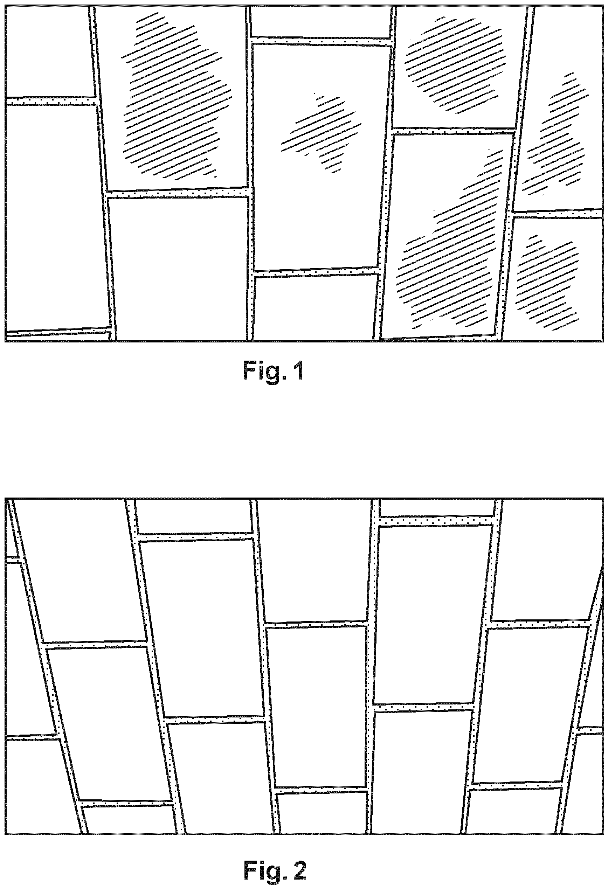

Die Fläche A (mit Probe A als Fugenmaterial) (Fig. 1) wies sichtbare weiße Rückstände auf, die in den Poren der Steinoberfläche eingelagert waren. Die Einlagerungen ließen sich auch bei mehrmaliger Anwendung von Bürsten und Wasser nicht entfernen und scheinen dauerhaft eine Verschmutzung zu hinterlassen.

Die Fläche B (mit Probe B als Fugenmaterial) (Fig. 2) wies keine dauerhaft sichtbaren Rückstände auf, geringe Spuren eines hellgrauen Rückstands wurden in den Steinporen vorgefunden. Diese ließen sich mühelos mit Bürste und Wasser entfernen. Eine problemlose Reinigung war somit das Ergebnis.

Die dauerhafte Verschmutzung der Oberfläche von Steinfläche A wurde vermutlich durch die Kalkeinlagerung aus dem Gemisch des vorbekannten Stands der Technik hervorgerufen.

## Patentansprüche

1. Binderzusammensetzung, umfassend
(i) Wasserglas der allgemeinen Formel (I):
M₂O*nSiO₂ (I)
wobei
M ein Alkalimetall bedeutet, ausgewählt aus der Gruppe bestehend aus K und Na und
n eine Zahl von 0,8 bis 5 und
(ii) ein organisches hydrokolloides Material.

2. Binderzusammensetzung nach Anspruch 1, umfassend zusätzlich Na₂CO₃.

3. Binderzusammensetzung nach einem der vorangehenden Ansprüche, wobei das organische hydrokolloide Material Psyllium ist.

4. Binderzusammensetzung nach einem der vorangehenden Ansprüche, wobei M in Formel (I) K bedeutet.

5. Binderzusammensetzung nach einem der vorangehenden Ansprüche wobei n in Formel (I) eine Zahl von 2,0 bis 4,0 ist.

6. Binderzusammensetzung nach einem der vorangehenden Ansprüche, wobei das Gewichtsverhältnis von Wasserglas zu organischem hydrokolloiden Material 1 : 0,1 bis 1 : 10, bevorzugt 1 : 0,5 bis 1 : 3 besonders bevorzugt 1 : 1 bis 1 : 2 beträgt.

7. Binderzusammensetzung nach einem der vorangehenden Ansprüche, wobei Na₂CO₃ enthalten ist und das Gewichtsverhältnis von Na₂CO₃ zu organischem hydrokolloiden Material 1 : 0,1 bis 1 : 10, bevorzugt 1 : 0,5 bis 1 :3 besonders bevorzugt 1 : 1 bis 1 : 2 beträgt und/oder das Gewichtsverhältnis von Na₂CO₃ zu Wasserglas 1 : 0,1 bis 1 : 10, bevorzugt 1 : 0,5 bis 1 :5 besonders bevorzugt 1 : 0,8 bis 1 : 1,2 beträgt.

8. Binderzusammensetzung nach einem der vorangehenden Ansprüche, wobei der pH-Wert der Zusammensetzung 5,0 bis 13,5, bevorzugt 9,0 bis 13,5 beträgt.

9. Wegematerial, umfassend eine Binderzusammensetzung nach einem der vorangehenden Ansprüche und eine Gesteinskörnung oder Wegematerial, bestehend aus den genannten Bestandteilen.

10. Wegematerial nach Anspruch 9, wobei das Gewichtsverhältnis Gesteinskörnung zur Gesamtmasse an Bindermaterial gemäß einem der Ansprüche 1 bis 9 von 80 : 20 bis 99,9 : 0,1, bevorzugt von 90 : 10 bis 99,6 : 0,4 weiter bevorzugt von 95,0 : 5 bis 99,0 beträgt.

11. Wegematerial nach einem der Ansprüche 9 oder 10, wobei das Wegematerial einen Wassergehalt vom 0 - 20 Gew.-% enthält, bezogen auf die Gesamtmasse des Wegematerials.

12. Wegematerial nach einem der Ansprüche 9 bis 11, wobei die Gesteinskörnung zu ≥ 95 Gew.-% bevorzugt ≥ 99 Gew.-% bezogen auf die Gesamtmasse der Gesteinskörnung aus Brechsand oder Natursand eines Körnungsgrößengemisches von 0,001 bis 2 mm besteht.

13. Wegematerial nach einem der Ansprüche 9 bis 11, wobei die Gesteinskörnung zu ≥ 95 Gew.-% bevorzugt ≥ 99 Gew.-% bezogen auf die Gesamtmasse der Gesteinskörnung aus einem Brechsand-Splitgemisch eines Körnungsgrößengemisches von 0,001 bis 8 mm oder 0,001 bis 5 mm oder0,001 bis 16 mm besteht.

14. Verwendung einer Binderzusammensetzung nach einem der Ansprüche 1 bis 8 zum Binden einer Gesteinskörnung.

15. Verfahren zum Bereitstellen einer Verkehrsfläche oder von Teilen einer Verkehrsfläche, umfassend die Schritte:
a) Bereitstellen einer Binderzusammensetzung nach einem der Ansprüche 1 bis 8 oder eines Wegematerials nach einem der Ansprüche 9 bis 13,
b) Auftragen der Binderzusammensetzung oder des Wegematerials auf den Bereich oder einen Teil des Bereiches, der die Verkehrsfläche bilden soll,
c) Verdichten des in Schritt b) aufgetragenen Materials und
d) gegebenenfalls Anfeuchten des aufgetragenen Materials.
